# EUROPEAN PATENT APPLICATION

(11) **EP 1 280 341 A1**
(43) Date of publication of application: **29.01.2003**
(21) Application number: 02015146.0
(22) Date of filing: 06.07.2002
(51) Int. Cl.: H04N 5/235, H04N 5/217

(54) **Optical imager circuit with tolerance of differential ambient illumination**

(30) Priority: 17.07.2001 US 907130
(71) Applicant: EATON CORPORATION, Cleveland, Ohio 44114-2584 (US)
(72) Inventor: Brickell, Christopher Gavin, Cedarburg, Wisconsin (US); Taranowski, Michael George, Greendale, Wisconsin 53129 (US)
(74) Representative: Patentanwälte Rüger, Barthelt & Abel

(57) **Abstract**

An apparatus (10) for producing an image of an object (12) which is illuminated by a pulse of artificial light and by ambient light. That apparatus (10) has a two dimensional array (15) of photodetector elements (20) each of which includes a semiconductor device (32) which responds to impingement of light by producing an electrical signal. A mechanism (30,60) is provided to remove the effects of the ambient light from the electrical signal to produce a resultant signal at an output terminal that corresponds only to the magnitude of the artificial light striking the semiconductor device (32). This apparatus (10) is immune from the semiconductor device (32) becoming saturated by intense ambient illumination and can be configured to detect high speed objects.

## Description

### Background of the Invention

### 1. Field of the Invention

The present invention relates to apparatus for producing a two-dimensional image, and in particular to circuits for such apparatus which reduce effects produced by very intense ambient light.

### 2. Description of the Related Art

Electronic vision systems are utilized in a variety of applications to automatically inspect objects and control one or more functions in response to the analysis of the resultant image. Such systems have been proposed use in automobiles to produce an image of the front seat in the vehicle to determine whether a person is present, and the position and size of such a person. That information derived from an image can be employed to control the deployment of an air bag in the event of an accident. For example, if an infant or a small child is found on the seat, deployment of the air bag may be inhibited to prevent injury of the occupant. Whereas, when an adult person is identified on the seat, the air bags can be deployed normally during an accident. The rate at which an air bag deploys for an adult also can be regulated depending upon the size of that individual. Air bag deployment may also be inhibited when the seat is found to be unoccupied or when an object, such as a bag of groceries, is found to be present.

The use of such imaging systems in an automobile and elsewhere is greatly affected by the level of light that illuminates the object being imaged. For example, very intense illumination produced by direct sunlight may cause saturation of the semiconductor optical detectors commonly used in imaging equipment. The detector saturation adversely affects image resolution and the ability to image fine details of the object being viewed. In the automotive application described previously, the fine details are required to analyze image depth, which is often needed in the. control of air bags.

Therefore, it is desirable to reduce the adverse effects produced by bright ambient illumination saturating the detectors of an imager array.

### Summary of the Invention

An apparatus produces an image of an object which is illuminated by a pulse of artificial light. That apparatus comprises a two dimensional array of photodetector elements, each of which includes a semiconductor device that responds to impingement of light by producing an electrical signal indicating the magnitude of that light. The electrical signal having a first component representing the amount of the artificial light and a second component representing the amount of ambient light. A circuit is connected to the semiconductor device to remove the second component from the electrical signal to produce a resultant signal at an output terminal that corresponds the magnitude of the artificial light which strikes the semiconductor device.

In one embodiment of the present apparatus, the mechanism that removes the second component from the electrical signal comprises a first storage capacitor and a second storage capacitor. A first transistor couples the semiconductor device to the first storage capacitor and a second transistor couples the semiconductor device to the second storage capacitor. A differential amplifier has one input connected to the first storage capacitor, another input connected to second storage capacitor, and the output terminal.

In another embodiment, the circuit which removes the second component from the electrical signal comprises a capacitor and an amplifier connected in series between the semiconductor device and the output terminal.

In both of those embodiments that apparatus preferably has a plurality of first conductors extending along one dimension of the two-dimensional array, and a plurality of second conductors extending along another dimension of the two-dimensional array. Each photodetector element further includes an output selection transistor coupling its output terminal to one of the plurality of second conductors in response to a control signal on one of the plurality of first conductors.

### Brief Description of the Drawings

FIGURE 1 is a block diagram illustrating an imaging system used in a motor vehicle;

FIGURE 2 is depicts the matrix of photodetector elements in an imager of the imaging system;

FIGURE 3 is a schematic diagram of the electrical circuit for one of the photodetector elements;

FIGURE 4 graphically depicts signal waveforms at different points of the electrical circuit; and

FIGURE 5 is a schematic diagram of an alternative embodiment of the electrical circuit a detector element.

### Detailed Description of the Invention

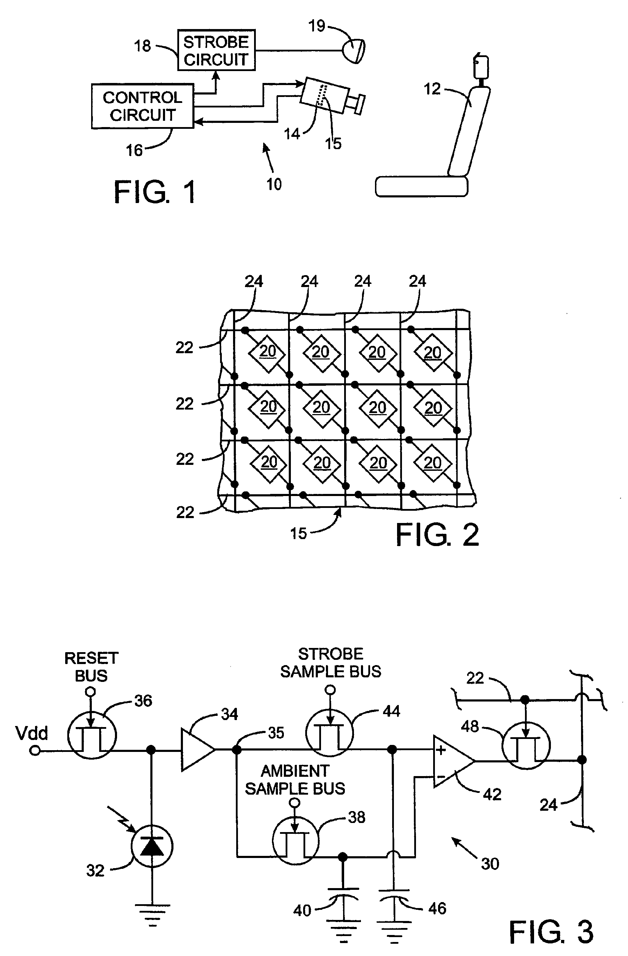

With initial reference to Figure 1, an imaging system is employed to produce a two-dimensional image of the area of seat 12 within a motor vehicle. The imaging system 10 comprises a camera 14 which incorporates an imager 15 formed by a plurality of photodetector elements, each comprising a semiconductor device which produces an electrical current in response to the intensity of light striking the device.

Referring to Figure 2, in order to form an image, the photodetector elements 20 of the imager 15 are arranged in rows and columns of a two-dimensional array and are interconnected by conductors 22 and 24, respectively for each row and column. The signal produced by an individual photodetector element can be selected by applying a control signal to the conductor 22 for the associated row and observing the signal that the detector applies to the conductor 24 for the associated column. This is a common technique for reading the image data from a two-dimensional array of photodetector elements.

The operation of the camera 14 is governed by a control circuit 16 which also provides a signal to a strobe circuit 18 which activates a light source 19 that illuminates the seating area. As will be described, the illumination of the object by the light source 19 is synchronized with the image acquisition. The light source 19 may emit infrared light to which the image detector 15 is sensitive. In that way, operation of the imaging system 10 does not interfere with the ability of a driver located on seat 12 to operate the motor vehicle.

Each photodetector element 20 within the imager 15 comprises the circuit 30 shown in Figure 3. That circuit 30 comprises a semiconductor photodiode 32 which produces an electrical signal that varies in response to the intensity of light striking the photodiode. The photodiode 32 is connected to the input of an amplifier 34 which increases the electrical signal. The input of the amplifier 34 also is connected to a source of voltage (Vdd) by a reset transistor 36 which when conductive clears accumulated charge on the photodetector element 20.

The output of the amplifier 34 is connected by a first transistor switch 38 to a first storage capacitor 40 connected between ground and the inverting input of a differential amplifier 42. The output of the first amplifier 34 also is connected by a second transistor switch 44 to a second storage capacitor 46 that is connected between ground and the non-inverting input of the differential amplifier 42. As will be described, the first storage capacitor 40 stores a charge which corresponds to the level of ambient light striking the photodiode 32 and the second storage capacitor 46 holds a charge corresponding to the output of the photodiode 32 when the light source 19 is strobed. The differential amplifier 42 produces an output signal corresponding to the difference between those charges.

An output selection transistor 48 couples the output of differential amplifier 42 to the imager's column conductor 24 associated with the particular photodetector element 20. The control electrode of the output selection transistor 48 is connected to the associated row conductor 22 of the imager 15. When the output selection transistor 48 is rendered conductive by an active signal on the row conductor 22, the output signal for the detector circuit 30, produced by the differential amplifier 42, is applied to the associated column conductor 24. As is conventional practice, the image produced by the imager is read-out by sequentially activating each row conductor 22, and selectively reading the signals on each of the column conductors 24. All the photodetector elements 20 are connected to a common reset bus, not shown, to reset the elements between image acquisition periods. As will be described, each photodetector element 20 also is connected to a Strobe Sample bus and an Ambient Sample bus, which carry signals that control image acquisition.

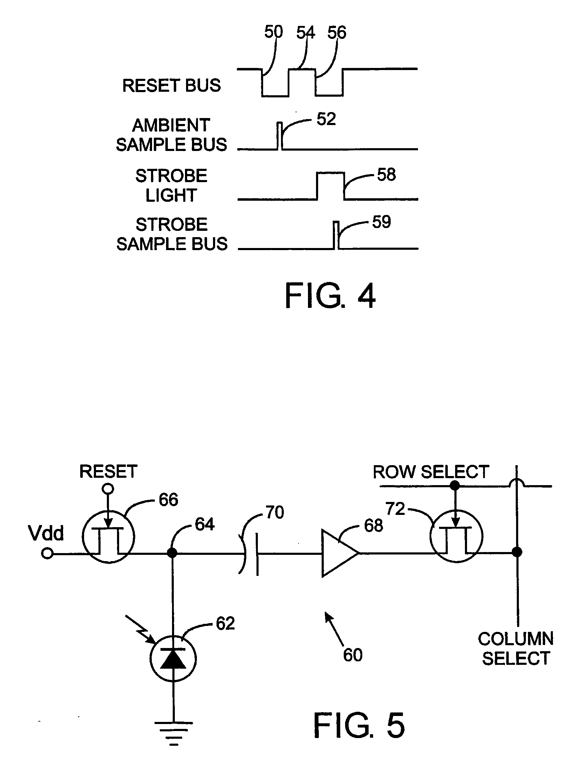

With reference to Figures 3 and 4, all the detector circuits 30 in the imager 15 operate simultaneously during the image acquisition phase. In that phase, a first low level pulse 50 is applied to the reset bus. This low level turns off the reset transistor 36 allowing any output produced by the photodiode 32 to be picked up by the amplifier 34, thus producing a voltage level at node 35 which corresponds to the intensity of the light striking the photodetector element. During the first pulse 50 on the reset bus, a high logic level pulse 52 occurs on the ambient sample signal bus that causes the first transistor switch 38 to become conductive. This applies the voltage level at node 35 across the first storage capacitor 40 which charges to a corresponding level. The ambient sample pulse 52 occurs a given amount of time after the commencement of the first low level reset bus pulse 50 in order to allow the signal produced by the photodiode 32 to propagate through the amplifier 34 and produce a valid output at node 35 before sampling by the first storage capacitor 40. Following termination of the ambient sample pulse 52, the reset bus signal again goes high at region 54 which resets the detector circuit 30. Thus the charge stored on the first storage capacitor 40 corresponds to the level of ambient light striking the photodiode 32.

Thereafter, a second low level pulse 56 is applied to the reset bus, and simultaneously, the strobe circuit 18 is triggered which activates the light source 19 producing a pulse of light 58 that illuminates the seat 12. During this light pulse and the second reset bus pulse 56, a brief high level pulse 59 is applied to the strobe sample bus which turns on the second transistor switch 44. This applies the amplified output of the photodiode 32 across the second storage capacitor 46, thereby producing a charge on that capacitor that corresponds to the level of light striking the photodiode 32. During this second reset bus pulse 56, the first transistor switch 38 is non-conductive so that the output of the photodiode at node 35 does not affect the previously stored charge.

At this time, the charge of the first capacitor 40 corresponds to the amount of ambient light striking the photodiode 32 and the second storage capacitor 46 holds a charge corresponding to the level of light received by the detector during the strobe pulse 58. The differential amplifier 42 produces an output signal that represents that difference between the voltage across the first storage capacitor 40 and the voltage across the second storage capacitor 46. That output signal corresponds to the strobe light from the object being imaged which is received by the photodiode 32. In other words, the ambient light level has been subtracted from the amount of light received during excitation of strobe light source 19 to produce the output signal. Therefore, the effects due to very bright ambient light conditions which saturate the photodiode 32 are removed when producing an image of the seat 12.

The operation of the imager can be enhanced so that the amount of charge transferred to the first storage capacitor 40 is varied by altering the timing between the falling edge of the first low level reset pulse 50 and the ambient sample pulse 52. Thus, if the ambient light intensity is sufficiently great to cause saturate the signal at node 35, then a shorter time between these pulses causes less charge to be transferred and produces a reduced output signal. Conversely, when the ambient light intensity is relatively low, a greater output signal can be produced by extending the time between the falling edge of the first low level reset pulse 50 and the ambient sample pulse 52. A similar adjustment of the time between the falling edge of the second low level reset pulse 56 and the strobe sample pulse 59 also can be performed.

Figure 5 illustrates an alternative embodiment of the present invention. This version takes advantage of the high frequency content of the output signal from the photodetector that results from the relatively short strobe light pulse. In this circuit 60, the photodiode 62 is connected between ground and node 64. The circuit is reset by a reset transistor 66 that between acquisition of images connects node 64 to a source Vdd of negative voltage. The node 64 is coupled by a storage capacitor 70 to the input of an amplifier 68. The output of the amplifier 68 is connected by a detector selection transistor 72 to the column conductor 24 associated with this photodetector element in the imager, when the detector selection transistor is rendered conductive by an active signal level on the associated row conductor 22.

The signal produced by the photodiode 62 has a relatively low frequency component due to the steady state character of the ambient light, such as sunlight or interior vehicle lighting, and that component is blocked by the capacitor 70. Other low frequency components resulting from dark current and certain types of noise also are blocked. However, the photodiode 62 output signal has a relatively high frequency component due to the short strobe pulsation of light source 19. This high frequency component passes through the capacitor 70 to the amplifier 68. Thus, when the detector circuit 60 is selected for read-out by an active signal on the row conductor 22, the signal applied to the associated column conductor 24 corresponds only to the response of the photodiode 62 to the strobe light and not to the ambient light.

It should be noted that this photodetector element design also is useful to detect objects moving at high speed. The difference output without strobe illumination results in a black (except for noise) output when the camera views objects that are not in motion. However, when objects are moving fast enough (defined by the optics chosen) to be imaged on different photodetector elements 20 between the ambient and strobe sample pulses, the moving object will be shown twice on the image frame: a negative image first, then a positive image. The dual storage elements allow the capture of very high speed moving objects such as bullets while suppressing background clutter. The dual image has the added feature of providing two dimensional trajectory information.

## Claims

1. An apparatus (10) for producing an image of an object (12) which is illuminated by a pulse of artificial light, said apparatus comprising:
an array of photodetector elements (20) each of which comprises:
a semiconductor device (32) which responds to impingement of light by producing an electrical signal, the electrical signal having a first component representing an amount of light received during a first time interval and a second component representing an amount of light received during a second time interval; and
a circuit (30, 60) connected to the semiconductor device (32) and having an output terminal at which is produced a resultant signal that corresponds to a difference between the first and second components.

2. The apparatus (10) as recited in claim 1 wherein each photodetector element (20) further comprises an amplifier (34) coupling the semiconductor device (32) to the circuit.

3. The apparatus (10) recited in claim 1 further comprising a plurality of row conductors (22); and a plurality of column conductors (24); wherein each photodetector element (20) is connected to one of the plurality of row conductors and one of the plurality of column conductors.

4. The apparatus (10) as recited in claim 1 further comprising a plurality of first conductors (22 or 24) extending along one dimension of the array; and a plurality of second conductors (24 or 22) extending along another dimension of the array; and wherein each photodetector element further comprises an output selection transistor coupling the output terminal to one of the plurality of second conductors in response to a control signal on one of the plurality of first conductors.

5. The apparatus (10) as recited in claim 1 wherein the circuit comprises:
a first storage capacitor (40) and a second storage capacitor (46);
a first transistor (38) coupling the semiconductor device (32) to the first storage capacitor (40);
a second transistor (44) coupling the semiconductor device (32) to the second storage capacitor (46); and
a circuit element (42) coupled to the first storage capacitor (40) and the second storage capacitor (46) and producing a signal at the output terminal that corresponds to a difference between a voltage across the first storage capacitor and a voltage across the second storage capacitor.

6. The apparatus (10) as recited in claim 5 wherein each photodetector element (20) further comprises an amplifier (34) coupling the semiconductor device (32) to both the first transistor (38) and the second transistor (44).

7. The apparatus (10) as recited in claim 1 wherein the circuit (3) comprises:
a first storage capacitor (40) and a second storage capacitor (46;
a first transistor (38) coupling the semiconductor device (32) to the first storage capacitor (40);
a second transistor (44) coupling the semiconductor device (32) to the second storage capacitor (46); and
a differential amplifier (42) having a first input connected to the first storage capacitor, a second input connected to second storage capacitor, and the output terminal.

8. The apparatus (10) as recited in claim 1 wherein each photodetector element (20) further comprises a reset transistor (36) which selectively couples the semiconductor device (32) to a voltage source to reset the respective photodetector element.

9. The apparatus (10) as recited in claim 1 wherein the circuit (30) comprises a capacitor (70) coupling the semiconductor device (32) to the output terminal.

10. The apparatus (10) as recited in claim 1 wherein the circuit (60) comprises a capacitor (70) and an amplifier (68) connected in series between the semiconductor device (32) and the output terminal.

11. An apparatus (10) for producing an image of an object (12) in which the apparatus has a plurality of photodetector elements (20) arranged in a two-dimensional array (15), wherein each photodetector element (20) comprises:
a semiconductor device (32) which responds to impingement of light by producing an electrical signal;
an amplifier (34) having an input connected to the semiconductor device (32) and having an output;
a first storage capacitor (40) and a second storage capacitor (46);
a first transistor (38) coupling the output of the amplifier (34) to the first storage capacitor (40);
a second transistor (44) coupling the output of the amplifier (34) to the second storage capacitor (46); and
a differential amplifier (42) having a first input connected to the first storage capacitor (40), a second input connected to second storage capacitor (46), and having an output terminal.

12. The apparatus (10) as recited in claim 11 wherein each photodetector element (20) further comprises a reset transistor (36) which selectively couples the input of the amplifier (34) to a voltage source (Vdd) to reset the respective photodetector element.

13. The apparatus (10) as recited in claim 11 further comprising:
a plurality of first conductors (22) extending along one dimension of the two-dimensional array (15); and
a plurality of second conductors (24) extending along another dimension of the two-dimensional array; and
wherein each photodetector element (20) further comprises an output selection transistor (48) coupling the output terminal of the differential amplifier (42) to one of the plurality of second conductors (24) in response to a control signal on one of the plurality of first conductors (22).

14. The apparatus (10) recited in claim 13 further comprising a control circuit (16) connected to each of the photodetector elements (20), the control circuit which activates the first transistor (38) to couple the output of the amplifier (34) to the first storage capacitor (40) during a first time period when the pulse of artificial light is not present, activates the second transistor (44) to couple the output of the amplifier (34) to the second storage capacitor (46) during a second time period when the pulse of artificial light is present, and applies the control signal to the output selection transistor (48) during a third time period.

15. An apparatus (10) for producing an image of an object (12) which is illuminated by a pulse of artificial light, said apparatus comprising a plurality of photodetector elements (20) arranged in a two-dimensional array (15), each photodetector element comprising:
a semiconductor device (62) which responds to impingement of light by producing an electrical signal;
an amplifier (68) having an input and an output;
a capacitor (70) coupling the semiconductor device (32) to the input of the amplifier.

16. The apparatus (10) as recited in claim 15 further comprising:
a plurality of first conductors (row select) extending along one dimension of the two-dimensional array; and
a plurality of second conductors (column select) extending along another dimension of the two-dimensional array; and
wherein each photodetector element (60) further comprises an output selection transistor (72) coupling the output of the amplifier to one of the plurality of second conductors in response to a control signal on one of the plurality of first conductors.

17. The apparatus (10) as recited in claim 15 wherein each photodetector element further comprises a reset transistor (66) which selectively couples a node (64) between the semiconductor device (32) and the capacitor (70) coupling the semiconductor device (32) to a voltage source (Vdd) to reset the respective photodetector element.
